# EUROPEAN PATENT SPECIFICATION

(11) **EP 0 561 428 B1**
(45) Date of publication and mention of the grant of the patent: **29.04.1998**
(21) Application number: 93108323.2
(22) Date of filing: 27.02.1987
(51) Int. Cl.: B32B 27/08

(54) **Oxygen barrier packaging film**
Verpackungssauerstoffsperrfilm
Film d'emballage barrière d'oxygène

(30) Priority: 28.02.1986 US 834694; 21.03.1986 US 842600; 21.03.1986 US 842321
(43) Date of publication of application: 22.09.1993
(62) Divisional of application: 87301779.2
(73) Proprietor: W.R. Grace & Co.-Conn., New York, New York 10036 (US)
(72) Inventor: Fant, Ennis M., Greenville, South Carolina 29607 (US); Shah, Gautam P., Simpsonville, South Carolina 29681 (US)
(74) Representative: Bentham, Stephen

(56) References cited:
- EP-A- 0 151 462
- EP-A- 0 169 640
- DE-A- 3 035 474
- FR-A- 2 516 017
- GB-A- 2 018 676
- US-A- 4 284 674

## Description

This invention relates generally to packaging films and more particularly to films useful in the packaging of food products.

Thermoplastic film, and especially films of polyolefin materials, have been used in the past to package various articles including perishable food products which require protection from the environment, resistance to physical and environmental abuse during storage and distribution, and an aesthetic and attractive appearance. Optical qualities such as high gloss, high clarity, and low haze contribute to the aesthetic consumer appeal of products wrapped in such packaging materials. Good optical properties also permit adequate inspection of the packaged product during the distribution cycle and by the end-user at point of purchase.

Oxygen barrier characteristics are required to provide extended shelf life for the packaged product in the case of food items, and various materials have been used to provide lower gas permeability and thereby reduce the oxygen transmission of the film. For example, ethylene vinyl alcohol copolymer (EVOH) has been known for some time as a good oxygen barrier material, and has been used in the past in multilayer packaging films, as described below in several patent publications. EVOH has also proved to be a good barrier to odors or fragrances.

Good heat seal strength is an essential prerequisite for thermoplastic films used in applications where a contained product puts stress on the heat seals, such as the transverse seals of pouches, bags, and other packaging made from such film. It is therefore advantageous to have a packaging film with improved heat seal strengths at given sealing temperatures, and a lower range of heat seal temperatures.

A shrink feature may be imparted to a thermoplastic film by orientation of the film during its manufacture. This shrink feature allows the film to shrink or, if restrained, create shrink tension within the packaging film on exposure to heat, for example, in a hot water bath or by exposure to hot air. In a typical process, manufactured film is stretched in either the machine direction or perpendicular to the machine direction, or both, i.e. in the longitudinal and transverse directions respectively, in varying degrees to impart a desired degree of shrinkability to the film upon subsequent heating. After this stretching operation, the film is rapidly cooled to impart this latent shrinkability to the resulting film. Shrinkable film provides a tight, smooth appearance to a product wrapped in such film as well as some added toughness in order to protect the packaged product from abuse.

It is sometimes also desirable to orient the packaging film and thereafter heat set the film by bringing the film to a temperature near its orientation temperature. This produces a film with substantially less shrinkability, while retaining much of the advantages of orientation, including improved modulus and optical properties.

Finally, it is common practice in packaging some goods, including food items, to use what is generally known as form-fill-seal equipment. In the vertical form-fill-seal arrangement, flexible packaging material is fed from a roll stock to a tube former where a tube is fashioned from the sheet material into a vertically dependent, upwardly open tube having overlapping longitudinal edges. These overlapping edges are subsequently sealed together longitudinally by means well known in the art and the end of the tube is sealed together by a pair of transverse heat seals which are vertically spaced apart. At this point the tube is filled with a measured quantity of the product to be packaged. A second heat sealing operation, typically performed after the filled tube has been downwardly advanced, completes enclosure of the product. Simultaneously with or shortly after the transverse heat sealing step the tube is completely transversely severed by known cutting means in a space between the vertically spaced apart pair of transverse heat seals. Thereafter the tube is downwardly advanced and the cycle is successively repeated so as to form a multiplicity of individually packaged products.

Alternatively, a single transverse heat seal including a pair of horizontally spaced apart sealing jaws may be used to form in effect two vertically adjacent heat seals which are simultaneously or subsequentially severed at a line vertically intermediate the heat seals.

Flexible packaging material useful for this as well as other applications typically must meet stringent requirements imposed by the particular food or other article to be packaged. In some cases, for example in high acid foods such as tomato paste and other tomato products, the package must be capable of adequately protecting the food item after packaging and through the distribution cycle until the packaged product reaches the end user at point of sale.

Additionally, products such as those described above are sometimes introduced into the formed tube at relatively high temperatures of about 200°F (93°C). The formed package must be able to withstand the still relatively high temperatures of the food product immediately after packaging, and subsequent cooling operations to bring the package to room temperature or other desired temperature range.

The flexible material must also have sufficient abuse resistance to physical and mechanical abuse imposed by the entire form fill seal or other packaging system, and the subsequent abuse which the package may undergo during the distribution cycle.

U.S. Patent No. 4,064,296 issued to Bornstein et al discloses a film formed by the coextrusion of hydrolyzed ethylene vinyl acetate (HEVA) with outside layer of, for example, ethylene vinyl acetate copolymer (EVA).

Of interest is U.S. Patent No. 4,284,674 issued to Sheptak and disclosing a multilayer film having a core layer of ethylene vinyl alcohol copolymer adhered on each side to nylon, each nylon layer in turn being adhered to a chemically modified polyolefin, and a further layer of primer material suitable to adhere the modified polyolefin to an outer layer of polypropylene or other materials suitable for conveying toughness, flex crack resistance and moisture barrier properties to the multiply film.

U.S. Patent No. 4,347,332 issued to Odorzynski et al discloses a film having a blend of nylon and ethylene vinyl alcohol copolymer.

Of interest is U.S. Patent No. 4,355,721 issued to Knott et al and disclosing a coextruded multilayered sheer having a first layer of nylon, an EVOH barrier layer, another layer of nylon, an adhesive layer, and another outside layer of, for example, high density polyethylene.

Of interest is U.S. Patent No. 4,398,635 issued to Hirt and disclosing a medication package in which a coextruded multiple layer sheet may have a structure including a layer of ethylene vinyl alcohol copolymer sandwiched between adjacent layers of nylon, and in which one of the nylon layers may be further adhered to a tie resin. The nylon layers may form either an outside surface or, in one example, internal layers with additional layers of polymeric materials added to each side of the sandwich structure.

Of interest is U.S. Patent No. 4,400,428 issued to Rosenthal et al, which discloses a composite film having a biaxially oriented polypropylene base film (BOPP) laminated on at least one surface with a multilayer structure including a gas barrier layer of a hydrolyzed ethylene vinyl acetate copolymer and a layer adjacent to the base film, and a heat sealable outer layer which may be for example modified polypropylene/ethylene copolymer. Adhesion-promoting layers of modified polyolefin may include polypropylene containing grafted units of alpha, beta-monounsaturated dicarboxylic acids.

U.S. Patent No. 4.407,873 issued to Christensen et al, discloses a packaging material for retort applications including a heat seal layer of linear low density polyethylene, a second layer of linear low density polyethylene with optionally 0% to 80% medium density polyethylene blended into the second layer, a third layer of anhydride modified medium density polyethylene, a fourth layer of nylon, a fifth layer of ethylene vinyl alcohol copolymer, and a sixth layer of nylon.

Of interest is U.S. Patent No. 4,421,823 issued to Theisen et al directed to a flexible wrapping material of limited construction having a biaxially oriented polypropylene/oxygen barrier substrate, in which the oxygen barrier material may be EVOH; an extrusion laminate of a biaxially oriented polymer such as polypropylene or nylon, bonded to polyethylene; and a layer of heat sealable polymeric material such as ethylene vinyl acetate copolymer laminated to the substrate. A special polymer which may be, for example, polyethylene or ethylene vinyl acetate copolymer is bonded to one surface of the biaxially oriented polypropylene.

Of interest is U.S. Patent No. 4,457,960 issued to Newsome, disclosing a multi-layer film having a core layer of a barrier material such as EVOH and EVOH blends. This film may be shrinkable and may be melt extruded, and may contain outside layers having a blend of linear low density polyethylene and ethylene vinyl acetate copolymer.

Also of interest is U.S. Patent No. 4,464,443 issued to Farrell et al, disclosing the use of EVOH in a five layer structure having outside layers of high density polyethylene and intermediate layers of Plexar adhesive.

Of interest is U.S. Patent No. 4,495,249 issued to Ohya et al, disclosing a five layer film having a core layer of saponified copolymer of ethylene and vinyl acetate, two outer layers of a mixture of linear low density polyethylene and ethylene vinyl acetate copolymer, and two adhesive layers disposed between the core layer and outer layers.

U.S. Patent No. 4,501,797 issued to Super et al discloses an unbalanced oriented multiple layer film including a first layer of polypropylene, a second layer of an anhydride modified polypropylene, and a third layer of ethylene vinyl alcohol copolymer.

Of interest is U.S. Patent No. 4,501,798 issued to Koschak et al disclosing the use of a blend of EVOH and nylon in an unbalanced multiple layer polymer film, also including either a linear low density polyethylene or ethylene vinyl acetate copolymer in a sealant layer. Adhesive layers of preferable anhydride derivatives are also present.

Also of interest is U.S. Patent No. 4,514,465 issued to Schoenberg disclosing a five layer thermoplastic film having surface layers comprising a four component blend of linear low density polyethylene, linear medium density polyethylene, ethylene vinyl acetate copolymer and at least one ultraviolet light stabilizer.

Finally, of interest is document EP-A-0 151 462, disclosing a multilayer film comprising a thin layer of an EVOH as an intermediate layer, and - on both sides of said EVOH layer - surface layers of linear low-density polyethylene, wherein the surface layers are arranged on the intermediate layer via an adhesive resin layer which is, e.g., a modified olefinic polymer containing carboxyl groups obtained by combining chemically an olefinic polymer with an ethylenically unsaturated carboxylic acid or its anhydride.

The present invention provides an oriented, coextruded thermoplastic multilayer film characterized by good oxygen barrier properties and having an aesthetically pleasing appearance with good optical properties such as clarity. The multilayer film may be a relatively thin thermoplastic multilayer film having superior toughness and abrasion resistance which may be totally coextruded and then oriented to provide a shrinkable film with good oxygen barrier properties. The coextruded thermoplastic multilayer film of the invention is preferably substantially free of voids in the barrier material of the film. It has good heat seal strength characteristics, and may be heat sealed at relatively low temperatures.

In accordance with the invention, a multilayer oriented film comprises (a) a core layer comprising an ethylene vinyl alcohol copolymer; (b) two outer layers each comprising a blend of linear low density polyethylene and very low density polyethylene; (c) two interior layers each comprising an adhesive polymeric material to bond the outer layers (b) to the core layer (a), said adhesive polymeric material comprising an acid- or acid anhydride- modified polyolefin.

The invention also provides a method of making such an oriented multilayer film which comprises the steps of (a) coextruding a core layer comprising an ethylene vinyl alcohol copolymer, two outer layers each comprising a blend of linear low density polyethylene and very low density polyethylene, two interior layers each comprising an adhesive polymeric material to bond the outer layers to the core layer, said adhesive polymeric material comprising an acid- or acid anhydride-modified polyolefin; (b) cooling the coextruded polymer melt; (c) collapsing the cooled coextruded polymer melt to provide a collapsed film; and (d) heating the collapsed film to its orientation temperature range, and stretching and orienting the heated film.

Prior to heating the collapsed film to its orientation temperature, there can be - optionally - an irradiation of the film.

### DEFINITIONS

"Intermediate layer", "interior layer", and the like are used herein to define a layer in a multilayer film adhered on both sides to other layers.

The term "oriented" and the like is used herein to define a polymeric material which has been heated and stretched to realign the molecular configuration, this stretching accomplished by a racking or a blown bubble process. A thermoplastic material stretched in one direction only is uniaxially oriented, and a material stretched in a longitudinal as well as transverse direction is considered biaxially oriented.

The term "ethylene vinyl alcohol copolymer", "EVOH" and the like is used herein to include saponified or hydrolyzed ethylene vinyl acetate copolymers, and refers to a vinyl alcohol copolymer having an ethylene comonomer, and prepared by, for example, hydrolysis of vinyl acetate copolymers, or by chemical reactions with polyvinyl alcohol. The degree of hydrolysis is preferably at least 50% and more preferably at least 85%. The ethylene comonomer is generally present in the range of about 15 to about 65 mole%.

The term "racking" is used herein to define a well known process for stretching coextruded and reheated multilayer film by means of tenter framing or blown bubble processes.

The terms "linear low density polyethylene", "LLDPE", and the like are used herein to describe copolymers of ethylene with one or more comonomers selected from preferably C₄ to C₁₀ alpha-olefins such as butene-1, octene, etc. in which the molecules of the copolymers comprise long chains with few side chain branches or cross-linked structures. This molecular structure is to be contrasted with conventional low or medium density polyethylenes which are more highly branched than their respective counterparts. LLDPE may also be characterized by the low pressure, low temperature processes used to produce these materials. LLDPE as defined herein has a density usually in the range of from about 0.916 grams/cubic centimeter to about 0.925 grams/cubic centimeter.

The term "polyamide" refers to high molecular weight polymers having amide linkages along the molecular chain, and refers more specifically to synthetic polyamide such as various nylons. This term also refers to copolymers of polyamides such as nylon 6 and nylon 12.

The terms "very low density polyethylene", "VLDPE" and the like as used herein refer to linear polyethylene copolymers having a density usually in the range of less than about 0.910 grams per cubic centimeter to about 0.860 grams per cubic centimeter.

All compositional percentages used herein are calculated on a "by weight" basis, unless otherwise indicated.

### BRIEF DESCRIPTION OF THE DRAWINGS

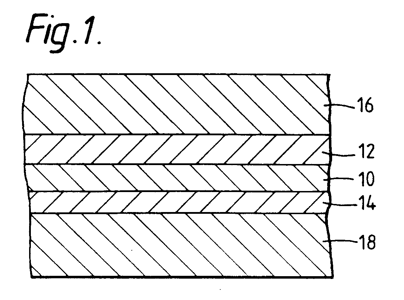

Further details are given below with reference to the drawing figures wherein Figure 1 is a schematic cross section of a preferred five layer embodiment of a multi-layer film of the invention.

### DESCRIPTION OF THE PREFERRED EMBODIMENT

Referring specifically to the drawing, in Figure 1, a schematic cross section of the five layer embodiment of the coextruded multilayer film of the invention is shown. Film structure is directed to an oriented multilayer film having the generalized structure of A/B/C/B/A where A is an outer layer, B is an intermediate adhesive layer, and C is a core layer containing a barrier material. Preferably, the outer layers A each comprise about 35% of the total multilayer film thickness; the intermediate layers B each comprise about 10% of the film thickness, and the barrier layer C about 10% of the total film thickness. For shrink film applications, the total thickness of the multilayer film is preferably between about 0.5 and 2.0 mils (0.013 to 0.05 mm), and more preferably between about 0.75 and 1.5 mils (0.02 to 0.04 mm). Even more preferably, an oriented multilayer film in accordance with the present invention is about 1 mil (0.025 mm) thick. Preferably, core layer 10 is an ethylene vinyl alcohol copolymer. This core layer is preferably between about .05 and 1 mil (0.025 mm) thick and more preferably about 0.1 mil (0.0025 mm) thick. Thicknesses less than about .05 mils (0.0013 mm) result in a very thin film which may exhibit voids in the core layer due to incidental variations in layer thickness. Thicknesses greater than about 1 mil (0.025 mm), on the other hand, make the film difficult to stretch or rack, and also result in increased costs due to the relatively expensive barrier component. Ethylene vinyl alcohol copolymer resins having an ethylene content of between about 28% and 49% are preferred. One such suitable EVOH is EVAL H commercially available from EVALCA.

Orienting EVOH to produce a heat shrinkable film has proven to be difficult. During the stretching or racking step for orienting such a film, the EVOH can sometimes develop voids. This phenomenon can result in some loss of oxygen barrier properties, which can affect, i.e. reduce the effective shelf life of, food products packaged in the EVOH film. The presence of voids in the EVOH layer can also result in the discoloration of a food product, such as processed meat, and therefore reduce the appearance and market value of a packaged food item.

It is therefore desirable in certain applications to blend the EVOH of the core layer with between 1% and 20% of a polyamide resin. The polyamide may be a polymer or copolymer comprising polyamide comonomers. When such a blend is used, the EVOH preferably comprises between about 80% and 99% by weight of the blend, and the polyamide comprises between about 1% and 20% by weight of the blend. More preferably, the blend comprises about 90% by weight of an ethylene vinyl alcohol copolymer, and about 10% of a polyamide.

To ensure adequate adhesion of outer layers 16 and 18 to core layer 10, intermediate adhesive layers 12 and 14 are provided. These are acid or acid anhydride-modified polyolefinic materials which can bond the core layer 10 to the outer layers 16 and 18. This material preferably includes a graft copolymer of a polyolefin, such as polyethylene, substrate with an unsaturated carboxylic acid or acid anhydride, blended with polyolefin, such as polyethylene. The particular adhesive polymer material selected for intermediate layers 12 and 14 is dependent on the polymeric material or blend of materials selected for outer layers 16 and 18. For example, a very suitable adhesive material is Plexar 3150 (Norchem), a low density polyethylene-based anhydride-modified resin. Generally, preferred adhesives are those having blends of a graft copolymer of a linear low density polyethylene and at least one unsaturated, fused ring carboxylic acid anhydride blended with one or more resins such as linear low density polyethylene, although other adhesives such as low density polyethylene-based adhesives, can also be used.

Adhesive layers 12 and 14 will each comprise from about 5% to about 15% of the total thickness of the five layer film, and more preferably about 10% of the total thickness of the film.

Outer layers 16 and 18 comprise a blend of LLDPE and VLDPE with preferably from about 70% to about 80% by weight of LLDPE, and from about 20% to about 30% by weight of VLDPE. More preferably, this blend comprises about 75%, by weight, of LLDPE and about 25% by weight of VLDPE.

The oriented films in accordance with the present invention are preferably cross linked, more preferably by irradiation with between about 3 and 13 megarads (M.R.) of irradiation, even more preferably between about 5 and 10 M.R., prior to orientation of the film. Orientation is done by racking or stretching the film at a racking ratio of between about 3.0 and 5.0 times the original dimensions of the film in the longitudinal (machine) and transverse directions. To orient the film e.g. in a blown bubble process, the coextruded and cooled tube is heated to its orientation temperature range. These ranges are well known for many polymeric materials, and are generally below the melting point of the film. Preferably, films made in accordance with the present invention are heated to between 90°C and 140°C and more preferably 105°C and 115°C.

Oriented multilayer films made in accordance with this invention provide good beat seal properties as well as abuse resistance, making these films useful for packaging food and non-food articles. The orientation of the multilayer films provides toughness and improved resistance to oxygen permeability, in addition to the advantages of a shrinkable film which may be heat shrunk about a product to be packaged.

The invention is illustrated in the examples below.

### EXAMPLE 1

A sample film was prepared by blending 75% of LLDPE (Dowlex 2045) and 25% VLDPE (DFDA 1137) blended with about 2% of a masterbatch concentrate containing slip and anti-block additives. This outer blend layer was coextruded with a core layer containing a blend of 90% EVOH (EVAL H) and 10% of a nylon 6/nylon 12 copolymer (Grillon CA-6), and an intermediate adhesive (Norchem Plexar 3150).

The Dowlex 2045 may be obtained from Dow Chemical Company. This is an especially preferred LLDPE for use in this invention, and is a copolymer of ethylene and octene and has a density at 23°C of about 0.920 grams per cubic centimeter and a melt flow index of from about 0.7 to about 1.2 grams per ten minutes (as measured by ASTM-D-1238, E-28). LLDPE adds toughness to the film.

The VLDPE has a preferred density of between 0.900 and 0.910 grams per cubic centimeter. A preferred resin is DFDA-1137 available from Union Carbide Corporation with a density of approximately 0.906 grams per cubic centimeter, a melt index of 0.721 grams per ten minutes, and a melting point of 244°F (118°C). This material is a butene based copolymer.

The EVOH of the core blend layer was EVAL H, available from EVAL Company of America and having an ethylene content of about 38% by weight and a melt index of about 1.5 grams/10 minutes. Other suitable EVOH resins include EVAL E, EVAL F, and EVAL K, as well as blends of the above, and preferably such resins of blends having a melt index of between about 1 to 4 grams per ten minutes (ASTM D 1238). Grillon CA-6, available from Emser Industries, was blended with the EVOH. The Grillon CA-6 is a nylon copolymer having about 60% nylon 6 and about 40% nylon 12 by weight.

Although nylon 12 would be effective alone as a blending material in the core layer, this is a relatively expensive material. Nylon 6 alone would be effective as a blending material, but with some difficulty in processing. The particular blend proved to be very advantageous in providing a core blend having the good barrier properties associated with EVOH, but with the processing and elongation advantages of nylon. Another suitable nylon copolymer is Grillon CR-9, having 20-30% nylon 6 and 70-80% nylon 12 by weight.

The intermediate adhesive material, Norchem Plexar 3150, is a low density polyethylene-based anhydride-modified resin produced by Norchem.

The polymer melt from the coextrusion die was then cooled and cast into a solid tape which was irradiated with about 8 megarads of irradiation. The tape was then heated to about 110°C in an oven and blown into a bubble. The bubble was expanded to about 3.5 times its original dimensions in both the machine (longitudinal) and transverse directions, and then deflated and ply separated into single wound film rolls. The final film had a thickness of about one mil (0.025 mm), and in addition to the shrink properties imparted by orientation, exhibited excellent toughness, good optics, burn out resistance, resistance to tear propagation, and heat sealability. The film also exhibited good abuse resistance and the necessary stiffness and lower tack required for packaging applications and was substantially free of voids in the EVOH/Polyamide blend layer.

### EXAMPLE 2

Another sample film was prepared similar in construction to the sample film of Example 1, and prepared by a similar process. The LLDPE used in the outer layers of the sample was Exxon LL-3001.

The physical properties of the two sample films are set forth in Table 1 below.

**TABLE 1**

| PROPERTY | EXAMPLE 1 | EXAMPLE 2 | TEST PROCEDURE |
|---|---|---|---|
| Tensile Strength (PSI) (kPa) | | | |
| longitudinal | 9,460 (65220) | 10,080 (69500) | ASTM D882-81 |
| Transverse | 8,260 (56950) | 9,300 (64120) | |
| Elongation at Break (Percentage) | 84 | 106 | ASTM D882-81 |

| Tear Propagation at 73°F (23°C) (Grams) | | | |
|---|---|---|---|
| Longitudinal | 14.00 | 17.63 | ASTM D1938-79 |
| Transverse | 13.69 | 21.13 | |

| Free Shrink at 240°F (116°C) (Percent) | | | |
|---|---|---|---|
| Longitudinal | 66 | 66 | ASTM D2732-70 |
| Transverse | 65 | 64 | |

| Shrink Tension at 195°F (91°C) (PSI) (kPa) | | | |
|---|---|---|---|
| longitudinal | 292 (2010) | 348 (2400) | ASTM D2838-81 |
| Transverse | 360 (2480) | 377 (2600) | |
| Ball Burst Impact at 73°F (23°C) (CM-KG) | 11.1 | 13.6 | ASTM D3420-80 |

| Optical Properties at 73°F (23°C) | | | |
|---|---|---|---|
| Haze (Percent) | 5.7 | 3.1 | ASTM D1003 Method A |
| Clarity (Percent) | 59.1 | 68.6 | ASTM D1746 |
| Gloss (45°) | 71 | 85 | ASTM 2457 |

| Water Vapor Transmission at 100°F (38°C) | | | |
|---|---|---|---|
| Grams/24 hours, 100 sq. in. (645 cm²) 100% RH (Gauge-mils) (mm) | 0.97 (1.06) (0.027) | 0.82 (1.22) (0.03) | ASTM F 372 |

| Oxygen Transmission at 73°F (23°C) | | | |
|---|---|---|---|
| CC (STP/24 hours, sq. meter, ATM) 0% RH (Gauge-mils) (mm) | 9.5 (1.03) (0.026) | 8.6 (1.21) (0.031) | ASTM D3985-81 |

## Claims

1. An oriented multilayer film comprising:
(a) a core layer comprising an ethylene vinyl alcohol copolymer;
(b) two outer layers each comprising a blend of linear low density polyethylene and very low density polyethylene;
(c) two interior layers each comprising an adhesive polymeric material to bond the outer layers (b) to the core layer (a), said adhesive polymeric material comprising an acid- or acid anhydride-modified polyolefin.

2. A film according to claim 1 wherein said outer layer (b) comprises a blend of 70% to 80% by weight of linear low density polyethylene and 30% to 20% by weight of very low density polyethylene.

3. A film according to claim 1 or claim 2 which is cross-linked.

4. A film according to any preceding claim wherein said core layer (a) further comprises a polyamide.

5. A film according to any preceding claim which has been oriented by racking at a racking ratio of 3.0 to 5.0 in both the longitudinal and transverse directions.

6. A method of making a multilayer film according to any preceding claim comprising the steps of:
(a) obtaining a coextruded polymer melt by coextruding a core layer comprising an ethylene vinyl alcohol copolymer, two outer layers each comprising a blend of linear low density polyethylene and very low density polyethylene, two interior layers each comprising an adhesive polymeric material to bond the outer layers to the core layer, said adhesive polymeric material comprising an acid- or acid anhydride-modified polyolefin;
(b) cooling the coextruded polymer melt;
(c) collapsing the cooled coextruded polymer melt to provide a collapsed film; and
(d) heating the collapsed film to its orientation temperature range, and stretching and orienting the heated film.

7. The method according to claim 6 further comprising cross-linking the collapsed film prior to heating the film to its orientation temperature.

8. The method according to claim 7 wherein the cross-linking is accomplished by irradiation of the collapsed film.

## Patentansprüche

1. Orientierte Mehrschichtenfolie, die
(a) eine Kernschicht, die ein Ethylen/Vinylalkohol-Copolymer umfaßt;
(b) zwei Außenschichten, die jeweils einen Blend aus linearem Polyethylen mit niedriger Dichte und Polyethylen mit sehr niedriger Dichte umfassen;
(c) zwei Innenschichten umfaßt, die jeweils einen polymeren Klebstoff umfassen, um die Außenschichten (b) an die Kernschicht (a) zu binden, wobei der polymere Klebstoff ein säure- oder säureanhydridmodifiziertes Polyolefin umfaßt.

2. Folie nach Anspruch 1, bei der die Außenschichten (b) einen Blend aus 70 bis 80 Gew.% linearem Polyethylen mit niedriger Dichte und 30 bis 20 Gew.% Polyethylen mit sehr niedriger Dichte umfassen.

3. Folie nach Anspruch 1 oder Anspruch 2, die vernetzt ist.

4. Folie nach einem der vorhergehenden Ansprüchen, bei der die Kernschicht (a) außerdem ein Polyamid umfaßt.

5. Folie nach einem der vorhergehenden Ansprüche, die durch Strecken in einem Streckverhältnis von 3,0 bis 5,0 in sowohl der Längsrichtung als auch der Querrichtung orientiert worden ist.

6. Verfahren zur Herstellung einer Mehrschichtenfolie gemaß einem der vorhergehenden Ansprüche, bei dem
(a) eine coextrudierte Polymerschmelze erhalten wird, indem eine Kernschicht, die ein Ethylen/Vinylalkohol-Copolymer umfaßt, zwei Außenschichten, die jeweils einen Blend aus linearem Polyethylen mit niedriger Dichte und ein Polyethylen mit sehr niedriger Dichte umfassen, und zwei Innenschichten, die jeweils einen polymeren Klebstoff umfassen, um die Außenschichten an die Kernschicht zu binden, coextrudiert werden, wobei der polymere Klebstoff ein säure- oder säureanhydridmodifiziertes Polyolefin umfaßt;
(b) die coextrudierte Polymerschmelze abgekühlt wird;
(c) die abgekühlte coextrudierte Polymerschmelze flachgelegt wird, um eine flachgelegte Folie zu liefern, und
(d) die flachgelegte Folie auf ihren Orientierungstemperaturbereich erwärmt wird, und die erwärmte Folie gestreckt und orientiert wird.

7. Verfahren nach Anspruch 6, bei dem außerdem die flachgelegte Folie vernetzt wird, bevor die Folie auf ihre Orientierungstemperatur erwärmt wird.

8. Verfahren nach Anspruch 7, bei dem das Vernetzen durch Bestrahlung der flachgelegten Folie bewirkt wird.

## Revendications

1. Film multicouche orienté comprenant :
(a) une couche d'âme comprenant un copolymère éthylène- vinyl alcool ;
(b) deux couches extérieures comprenant chacune un mélange de polyéthylène linéaire faible densité et de polyéthylène très faible densité ;
(c) deux couches intérieures comprenant chacune un matériau polymère adhésif pour relier les couches extérieures (b) à la couche d'âme (a), ledit matériau polymère adhésif comprenant une polyoléfine modifiée par acide ou anhydride d'acide.

2. Film selon la revendication 1, dans lequel ladite couche extérieure (b) comprend un mélange de 70 % à 80 % en poids de polyéthylène linéaire faible densité et de 30 % à 20 % en poids de polyéthylène très faible densité.

3. Film selon la revendication 1 ou la revendication 2 qui est réticulé.

4. Film selon l'une des revendications précédentes, dans lequel ladite couche d'âme (a) comprend en outre un polyamide.

5. Film selon l'une des revendications précédentes qui a été orienté par étirage suivant un rapport d'étirage de 3 à 5 dans à la fois les directions longitudinale et transversale.

6. Procédé de préparation d'un film multicouche selon l'une des revendications précédentes comprenant les étapes suivantes :
(a) obtention d'un produit fondu de polymère coextrudé par coextrusion d'une couche d'âme comprenant un copolymère d'éthylène-vinyl alcool, deux couches extérieures comprenant chacune un mélange de polyéthylène linéaire faible densité et de polyéthylène très faible densité, deux couches intérieures comprenant chacune un matériau polymère adhésif pour relier les couches extérieures à la couche d'âme, ledit matériau polymère adhésif comprenant une polyoléfine modifiée par acide ou anhydride d'acide ;
(b) refroidissement du Produit fondu de polymère coextrudé ;
(c) déformation du produit fondu polymère coextrudé refroidi pour donner un film déformé ; et
(d) chauffage du film déformé jusqu'à sa température d'orientation, et allongement et orientation du film chauffé.

7. Procédé selon la revendication 6 comprenant en outre la réticulation du film déformé avant chauffage du film jusqu'à sa température d'orientation.

8. Procédé selon la revendication 7, dans lequel la réticulation est accomplie par irradiation du film déformé.
